# DEMANDE DE BREVET EUROPEEN

(11) **EP 2 610 717 A1**
(43) Date de publication de la demande: **03.07.2013**
(21) Numéro de dépôt: 11306814.2
(22) Date de dépôt: 30.12.2011
(51) Int. Cl.: G06F 3/041, G06Q 20/30

(54) **Dispositif de communication pour équipement comprenant un écran tactile, système de communication**

(71) Demandeur: Gemalto SA, 92190 Meudon (FR)
(72) Inventeur: Chafer, Sylvain, 92190 MEUDON (FR); Thill, Michel, 92190 MEUDON (FR); Marseille, François-Xavier, 92190 MEUDON (FR)

(57) **Abrégé**

Le dispositif de communication pour équipement comprend un écran tactile. Le dispositif comporte un terminal et un convertisseur. Le terminal comprend au moins un actionneur permettant d'émuler un contact actif sur une première zone délimitée de l'écran tactile de l'équipement. Le convertisseur permet la conversion de données numériques en une séquence de commandes destinées au terminal et permettant la génération d'une séquence de contacts actifs par le terminal. Le terminal est connecté au convertisseur et disposé sur une partie de l'écran tactile de telle manière que des données numériques peuvent être transférées à l'équipement lorsque le terminal est disposé sur l'écran tactile.

## Description

### DOMAINE

Le domaine de l'invention concerne le champ des appareils de communication tels que des téléphones, Smartphones et PDA. Plus généralement, l'invention concerne les dispositifs de communication permettant d'établir une communication entre deux équipements ayant un écran tactile.

### ART ANTERIEUR

Actuellement, il existe différentes options pour établir une communication entre différents appareils électroniques nomades.

Les équipements ayant un écran tactile sont de plus en plus nombreux et interagissent ensemble de plus en plus au travers des réseaux, des applications et des connexions directes telles que des liaisons Bluetooth ou USB. Les besoins d'interconnexion de ces équipements est croissant. Un inconvénient est que la démultiplication des protocoles d'échanges, des standards et des normes propriétaires nuit à l'interopérabilité des équipements nomades des différents constructeurs.

En outre, les différentes connectiques développées sont également un frein à l'interopérabilité des liaisons filaires entre équipements électroniques.

Des moyens alternatifs peuvent pallier à ces inconvénients. Typiquement, les communications sonores, par l'utilisation du haut-parleur et/ou du microphone d'un équipement nomade, pourraient permettre un échange de données standard et commun à tous les équipements.

Cependant, cette solution présente l'inconvénient de constituer un potentiel désagrément sonore.

### RESUME DE L'INVENTION

L'invention permet de résoudre les inconvénients précités.

L'invention concerne un dispositif de communication pour équipement comportant un écran tactile. Il permet de transférer des données numériques d'un premier équipement vers un second équipement comportant un écran tactile.

L'invention comprend un terminal permettant d'établir une liaison pour le transfert de données numériques au moyen d'au moins un actionneur permettant d'émuler un contact actif sur une première zone délimitée de l'écran tactile d'un équipement.

L'invention permet également d'établir une liaison bidirectionnelle pour le transfert de données numériques entre deux équipements comportant chacun un écran tactile, les écrans tactiles participant aux moyens de transferts de données.

L'invention est un dispositif de communication pour équipement comprenant un écran tactile qui comprend un terminal et un premier convertisseur. Le terminal comprend au moins un actionneur permettant d'émuler un contact actif sur une première zone délimitée d'un écran tactile de l'équipement. Le premier convertisseur est connecté au terminal pour permettre la conversion de données numériques en une séquence de commandes destinées au terminal. Ledit terminal permet un transfert de données numériques à l'équipement par la génération d'une séquence de contacts actifs lorsqu'il est disposé sur l'écran tactile.

Préférentiellement, les contacts actifs peuvent comprendre des propriétés d'un contact tactile. Au moins un actionneur peut comprendre des moyens permettant de faire varier localement la charge d'un écran tactile capacitif. Le terminal peut comprendre au moins trois actionneurs non alignés. Les actionneurs peuvent définir des points du périmètre de la première zone. Le dispositif peut comprendre une carte à puce, ladite carte à puce comprenant le terminal et le convertisseur. Le dispositif peut comprendre un lecteur de carte, ledit lecteur de carte comprenant le terminal et le convertisseur. Le lecteur de carte peut être un lecteur de cartes à puces.

Optionnellement, le terminal peut comprendre une optique permettant de détecter un signal lumineux provenant de l'écran tactile de manière à localiser la source, la durée d'émission et l'intensité lumineuse. Un second convertisseur peut permettre la conversion d'une séquence d'impulsions lumineuses en données numériques. Le dispositif peut comprendre au moins deux terminaux permettant d'établir une liaison entre deux équipements comprenant chacun un écran tactile.

Selon un autre aspect, l'invention est un système de communication comprenant un dispositif de communication tel que précédemment défini et un équipement électronique comprenant un écran tactile. L'équipement électronique comprend un calculateur permettant de décoder une séquence de contacts actifs générés par le dispositif de communication.

Préférentiellement, le calculateur peut permettre de générer des commandes de manière à ce que l'écran tactile émette une séquence d'impulsions lumineuses dans des zones données de l'écran tactile.

### BREVES DESCRIPTION DES FIGURES

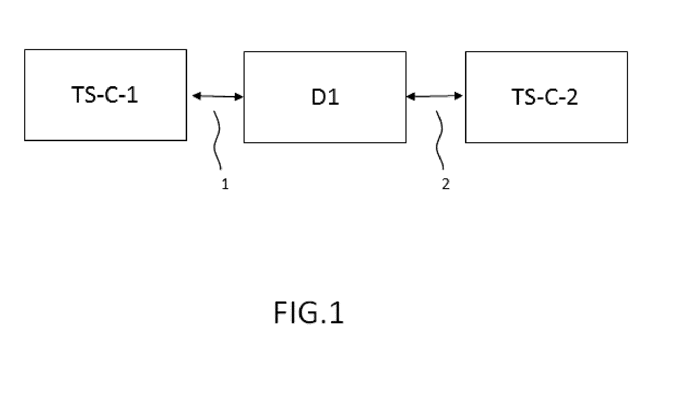

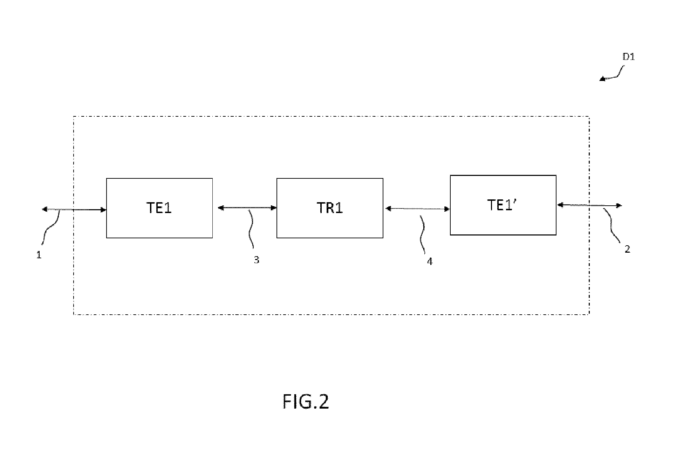

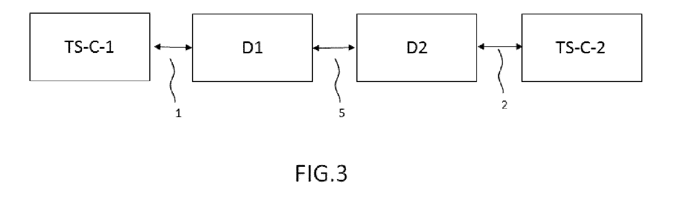

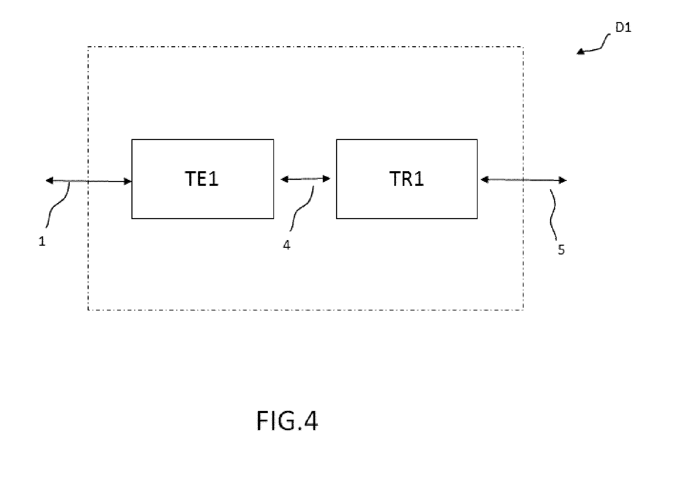

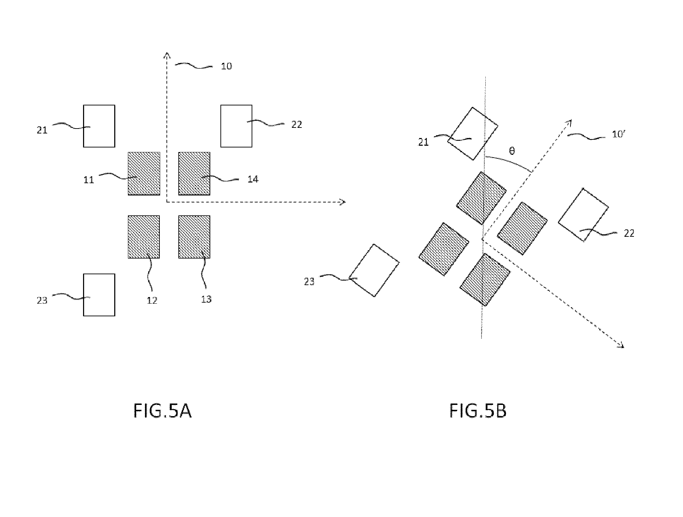

D'autres caractéristiques et avantages de l'invention ressortiront à la lecture de la description détaillée qui suit, en référence aux figures annexées, qui illustrent:
■ figure 1 : une première configuration du dispositif de l'invention permettant une liaison de données bidirectionnelle;
■ figure 2 : une première architecture du dispositif de l'invention;
■ figure 3 : une seconde configuration de deux dispositifs de l'invention montés en série et permettant une liaison de données bidirectionnelle ;
■ figure 4 : une seconde architecture du dispositif de l'invention ;
■ figure 5 : une disposition possible des actionneurs d'un terminal de l'invention comprenant un système d'auto-positionnement.

### DESCRIPTION

Dans la suite de la description, on appelle « contact actif » un contact sur un écran tactile généré par un terminal et émulant les propriétés d'un contact tactile normalement réalisé par la main de l'homme.

Dans un premier mode de réalisation de l'invention, le dispositif D1 comprend des moyens permettant d'établir une connexion de données entre deux équipements, notés TS-C-1 et TS-C-2, comportant chacun un écran tactile.

La connexion établie permet une première liaison 1 de données bidirectionnelle d'une part entre le premier équipement TS-C-1 et l'équipement D1 de l'invention et permet, d'autre part, une seconde liaison 2 entre le second équipement TS-C-2 et l'équipement D1 de l'invention.

L'équipement D1 comprend un terminal qui permet de transférer des données numériques par l'intermédiaire d'un écran tactile.

L'équipement D1 comprend au moins un actionneur permettant d'émuler ou de générer des contacts actifs dans une zone délimitée de l'écran tactile de l'équipement TS-C-1.

Lorsque l'écran est une dalle tactile résistive. Le contact actif comprend une pression sur au moins un point de l'écran de manière à entrainer un contact entre les deux surfaces conductrices de la dalle. Le contact permet de générer, tel qu'un contact d'un doigt humain, une variation dans les champs électriques des deux faces qui sera retransmis en information et traité par le calculateur de l'équipement.

Le contact actif généré peut correspondre à une pression sur la surface de l'écran tactile permettant de réduire l'espace entre les deux surfaces. Un contact actif peut être réalisé à partir d'un stylet tout en ayant une très bonne précision du point de contact. Le contact actif sur l'écran tactile peut être émulé par n'importe quel composant mécanique comportant une « pointe ».

Lorsque l'écran est capacitif, le contact actif comprend une pression sur une surface solide de type verre, laquelle est parcourue par une grille électriquement chargée et presque invisible à l'oeil nu.

L'accumulation de charges électriques sur la plaque de verre lors du contact actif transfère une partie de ces charges dans l'actionneur, ce qui provoque un déficit qu'un calculateur de l'équipement peut localiser pour traiter l'information.

Le toucher actif lorsqu'il est réalisé sur un écran dit capacitif permet de mesurer le temps de décharge d'une matrice de capacités. La capacitance locale de l'écran tactile peut être modifiée par la génération d'un contact actif émulé par un actionneur.

En détection, le traitement de l'information se fait au moyen d'un algorithme de calcul du calculateur de l'équipement. Il détermine le ou les points d'impacts, par exemple dans le cas d'un toucher multiple simultané sur l'écran. En outre, le calculateur est capable de déterminer, par exemple, le sens du mouvement ou parfois l'intensité de la pression exercée.

Le dispositif de l'invention comprend un terminal permettant de réaliser la fonction d'interface avec un équipement comprenant un écran tactile. Le terminal est en contact physique avec un écran tactile d'un équipement.

Le dispositif de communication de l'invention comprend en outre un convertisseur de données permettant de générer des informations définissant un contact actif, c'est-à-dire un contact réalisé par un actionneur du terminal. Il peut s'agir, par exemple, de commandes électriques générées à partir de données numériques provenant d'un autre équipement. Le convertisseur permet notamment de coder et décoder l'information émis ou reçu par l'équipement comportant un écran tactile.

La figure 2 représente un mode de réalisation de l'invention dans lequel le dispositif comprend un terminal TE1 et un convertisseur TR1. Le dispositif de l'invention peut comprendre un second terminal TE1' par exemple lorsque le dispositif permet d'interconnecter deux équipements comportant un écran tactile.

Le convertisseur TR1 peut comprendre les fonctions émission-réception de tout type d'émetteur-récepteur. Le convertisseur TR1 permet d'émettre et recevoir des données et de les convertir en données exploitables par le terminal du dispositif. Il est donc indifféremment appelé dans la présente description convertisseur et/ou émetteur-récepteur dans la mesure où il permet de réaliser les deux fonctions de transferts de données par émission-réception et de conversion de données.

L'émetteur-récepteur peut permettre des liaisons filaires ou sans fils. Les données numériques peuvent être intégrées et encapsulées dans des trames et selon des couches de n'importe quel protocole de transfert de données.

Les informations numériques sont converties et échantillonnées de telle manière que les contacts actifs générés sur un écran tactile correspondent à une séquence d'informations numériques provenant d'un émetteur-récepteur.

La figure 2 représente une liaison de données 3 entre un terminal TE1 et un émetteur-récepteur TR1 qui peut être adaptée à tout type d'écran tactile utilisé. Une liaison de données 4 de même type peut être utilisée entre l'émetteur-récepteur TR1 et le terminal TE1'.

Lorsqu'une liaison est établie entre deux équipements, la liaison est normalement « bidirectionnelle » de manière à ce que deux équipements puissent communiquer entre eux dans les deux sens. Du point de vue d'un premier équipement ayant un écran tactile, ce dernier peut émettre des données et/ou en recevoir.

Lorsque l'équipement ayant un écran tactile reçoit des données, le terminal s'interfaçant avec l'écran tactile transmet des données par l'intermédiaire de la génération d'une séquence de contacts actifs dans une zone définie de l'écran par au moins un actionneur.

Lorsque l'équipement ayant un écran tactile émet des données, le terminal est capable dans un mode amélioré de l'invention de recevoir, d'analyser et d'interpréter une séquence d'impulsions lumineuses issues d'une zone de l'écran tactile. En effet, le calculateur d'un équipement ayant un écran tactile est capable d'émettre en tout point de son écran une ou des impulsion(s) lumineuse(s). Les impulsions peuvent être émises séquentiellement ou simultanément dans différentes parties d'une zone donnée.

Dans ce mode de réalisation, le terminal est équipé d'une optique de détection de l'intensité lumineuse et des fréquences des impulsions. Le terminal comprend une interface et un capteur permettant la réception d'informations lumineuses provenant d'une zone définie de l'écran tactile d'un équipement.

Le terminal est muni de moyen permettant de délivrer un signal au convertisseur de données TR1 qui est capable de générer un train de données numériques exploitables par un calculateur d'un émetteur-récepteur.

Le terminal du dispositif de l'invention comporte donc au moins deux fonctions permettant de s'interfacer avec un écran tactile d'un équipement. La première fonction concerne l'émission de données par le biais d'actionneurs générant des contacts actifs sur la surface de l'écran tactile ou d'une partie de la surface. La seconde fonction permet de recevoir et de discriminer des signaux lumineux provenant de l'écran tactile et de générer des données exploitables à transmettre.

L'invention s'applique aussi bien aux écrans résistifs qu'aux écrans capacitifs.

Quel que soit le type d'écran tactile d'un équipement qui s'interface avec le dispositif de l'invention, le terminal comprend des interfaces permettant de définir une configuration type pour établir une communication. Notamment, dans cette configuration, certains paramètres peuvent être définis tels que la résolution du contact actif sur l'écran tactile, le nombre acceptable de contacts simultanés, le temps de charge et de décharge de la matrice pour un écran capacitif correspondant à un contact actif généré par le terminal.

Avantageusement, les actionneurs peuvent comprendre des moyens permettant d'augmenter ou diminuer et d'une manière générale d'adapter le pas du contact actif sur un écran, c'est-à-dire la résolution pixel du contact.

En réception, le terminal reçoit une intensité lumineuse et un temps d'émission associé définissant une impulsion lumineuse. Quel que soit le type d'écran utilisé la configuration du terminal est identique pour un écran capacitif ou résistif. Le capteur d'un terminal d'un équipement de l'invention ne dépend pas du type d'écran de l'équipement.

Le capteur du terminal est déterminé par certains paramètres qui permettent de définir une configuration type en réception, la réception étant perçue du point de vue du dispositif de l'invention. Notamment, parmi ces paramètres, il est possible de définir pour le capteur du terminal la densité nominale d'une impulsion lumineuse. Cette dernière peut être notamment dépendante de la zone minimale définie d'émission d'une impulsion qui peut être exprimée en pixels. Un autre paramètre peut être la gamme de couleur des impulsions lumineuses émises ou encore la fréquence de rafraichissement de l'écran tactile.

Selon les modes de réalisation de l'invention, le dispositif de communication peut être utilisé pour établir une communication entre deux équipements comprenant un écran tactile.

Dans l'exemple de la figure 2, le dispositif de l'invention comprend deux terminaux et un émetteur-récepteur. Dans un autre mode, le dispositif de l'invention ne comprend qu'un seul terminal et un émetteur-récepteur.

Dans une autre variante de réalisation, le dispositif de l'invention peut comprendre deux émetteurs-récepteurs et deux terminaux. Il peut alors s'agir de deux dispositifs D1 et D2 montés en série par exemple tels que représentés à la figure 3 et la figure 4. Chacun des dispositifs dans ce cas comprend un émetteur-récepteur TR1 et un terminal TE1.

Dans sa réalisation la plus simple, l'invention comprend un terminal et un convertisseur de données et permet d'établir une liaison monodirectionnelle vers l'équipement comprenant un écran tactile. Par exemple, un mode de réalisation comprend un dispositif de stockage tel qu'une carte à puce ou une mémoire flash. Le dispositif de stockage de données délivre des données au convertisseur du dispositif de l'invention qui permet de délivrer des commandes au terminal et de générer une séquence de contacts actifs sur l'écran lorsque le dispositif de l'invention est positionné sur l'écran.

Cette configuration permet, par exemple, de délivrer des informations d'authentification à l'équipement comportant un écran tactile ou n'importe quelles autres informations utiles.

Le dispositif de l'invention peut également être associé à un lecteur de cartes par exemple un lecteur de cartes de type « Smart Card » utilisant le protocole de transfert de données ISO7816.

Chacun des terminaux comprend une interface physique pour être associé avec un équipement ayant un écran tactile. L'interface physique peut comprendre au moins un actionneur et selon les modes de réalisation elle peut comprendre un capteur.

Les émetteurs-récepteurs peuvent coder et décoder des informations dans les deux sens de transmission d'une liaison bidirectionnelle.

Selon les variantes de réalisations, tous les formats de données peuvent être utilisés y compris ceux permettant de s'interfacer simplement avec un microcontrôleur par exemple.

Selon des variantes de réalisation, le terminal du dispositif de l'invention comprend une pluralité d'actionneurs permettant d'être en contact avec un écran tactile. De manière préférentielle, les actionneurs ne sont pas alignés et définissent au moins trois points de contacts sur l'écran tactile. Les actionneurs sont préférentiellement dans un même plan pour assurer une uniformité de contacts avec l'écran tactile.

Avantageusement, l'invention peut être adaptée à n'importe quel système d'exploitation d'un équipement ayant un écran tactile, tels qu'Androïd, par exemple.

Le dispositif de l'invention a l'avantage de s'affranchir de protocoles de données standards ou propriétaires dans la mesure où le transfert de données est réalisé par une interface comprenant un écran tactile.

Les données encodées par le convertisseur et transférées par le terminal peuvent provenir de n'importe quelle source de données et être encapsulées dans n'importe quelles trames de données de n'importe quel protocole de transfert de données.

Les contacts actifs transcrivant les données encodées peuvent être paramétrés de différentes manières par l'intermédiaire d'une configuration de certains paramètres de réglage du terminal. Parmi ces paramètres, il est possible de régler la durée du contact établi par un actionneur sur l'écran tactile, les coordonnées du contact dans une zone donnée de l'écran ou ses coordonnées sur l'écran.

Le capteur du terminal peut être configuré de manière à discriminer la durée d'une impulsion lumineuse provenant de l'écran ou encore la zone ou les coordonnées du point d'où provient une impulsion lumineuse.

Les impulsions lumineuses peuvent définir un mode de transfert de données asynchrone ou synchrone. Dans le cas d'une liaison synchrone, certains pixels peuvent définir une horloge par un clignotement d'une zone à une fréquence définie. Par ailleurs, les couleurs des impulsions, ainsi que les contrastes entre les zones lumineuses et les zones sombres peuvent constituer une organisation de l'information transmise ou reçue selon où l'on se positionne dans la chaine du traitement du signal. Ces derniers paramètres peuvent être réglés. Les couleurs peuvent être encodées selon un mot de 16bits pour chacun des pixels de la zone de l'écran tactile dans laquelle s'établit la communication. Des zones comprenant une pluralité de pixels peuvent être définies.

Avantageusement, le terminal du dispositif de l'invention comprend une fonction d'auto-positionnement qui permet de placer le terminal dans n'importe quelle orientation lorsqu'il est disposé sur l'écran tactile.

Au moins trois actionneurs permettent de définir un triangle et donc une position de référence.

Les figures 5A et 5B représentent deux empreintes d'un terminal positionnés sur un écran tactile. La figure 5A représente d'une part trois empreintes 21, 22, 23 correspondantes à trois actionneurs susceptibles d'établir un contact à ces positions et quatre empreintes 11, 12, 13, 14 correspondantes aux positions d'où proviennent les impulsions lumineuses. Le terminal est positionné sur l'écran tactile dans un premier repère 10.

La figure 5B représente les empreintes des actionneurs et capteurs d'un terminal dans un second référentiel 10' dans lequel l'actionneur a changé d'orientation par rapport au repère 10 de la figure 5A. Un angle θ défini l'orientation du terminal sur l'écran tactile.

La donne définie par les empreintes des actionneurs 21, 22, 23 permet de définir une partie de l'écran dans laquelle la communication s'établie entre le dispositif de l'invention et un équipement donné.

Le dispositif de l'invention peut donc initialiser sa communication par une séquence particulière prédéfinie et connue aux moyens de l'activation des actionneurs du terminal. Dans un premier temps, le dispositif de l'invention permet de communiquer à un équipement sa présence et son positionnement par une séquence de contacts actifs prédéfinis initiée par le terminal au contact d'un écran tactile.

L'équipement relève la position des actionneurs afin de définir la position d'une zone et de son orientation afin d'établir une liaison dans laquelle des informations peuvent être échangées.

La zone de communication peut être avantageusement définie par la zone située sensiblement à l'intérieur du périmètre d'une surface délimitée par les empreintes des actionneurs.

Une empreinte telle que représentée aux figures 5A et 5B peuvent comprendre différentes parties dans lesquelles les contacts peuvent être paramétrés tels que définis précédemment.

Une séquence d'activation peut alors être envoyée du terminal à l'écran tactile permettant à l'équipement d'identifier le dispositif, sa position et son orientation. En outre, cette détermination permet aux émetteurs d'émettre dans une certaine zone tout en laissant disponible une partie de l'écran.

Dans un mode amélioré, la zone définie par les empreintes des actionneurs et/ou des capteurs d'un terminal peut être adaptée de manière à occuper pas plus de 10% de la surface totale de l'écran tactile. Dans ce dernier cas des moyens permettant de déplacer ou de mouvoir les actionneurs et/ou les capteurs du terminal peuvent être intégrés dans le dispositif de l'invention.

La séquence d'activation peut-être envoyée de manière récurrente de manière à établir un positionnement en temps réel et prévenir de tout mouvement potentiel du terminal sur l'écran tactile.

Le dispositif de l'invention comporte l'avantage d'avoir une certaine flexibilité d'utilisation quant au positionnement du terminal sur l'écran tactile. Notamment, il permet de gérer les petits mouvements en corrigeant la définition de la zone de communication de l'écran tactile pendant la communication.

Dans un mode particulier de réalisation, le dispositif de l'invention comprend des moyens auto-adhésifs permettant de fixer le terminal à l'écran tactile. Avantageusement, une zone prédéfinie de l'écran tactile peut être destinée à l'établissement d'une communication avec le dispositif de l'invention. Un exemple de réalisation est un film de protection d'écran tactile qu'on trouve dans le commerce.

Il peut s'agir également de système d'attache magnétique comportant des aimants.

L'invention est particulièrement avantageuse pour l'établissement de communications et de transferts de données entre tablettes ou Smartphone ou PDA comportant un écran tactile.

## Revendications

1. Dispositif de communication pour équipement comprenant un écran tactile, **caractérisé en ce qu'**il comprend :
• un terminal comprenant au moins un actionneur permettant d'émuler un contact actif sur une première zone délimitée d'un écran tactile de l'équipement et ;
• un premier convertisseur connecté au terminal permettant la conversion de données numériques en une séquence de commandes destinées au terminal,
ledit terminal permettant un transfert de données numériques à l'équipement par la génération d'une séquence de contacts actifs lorsqu'il est disposé sur l'écran tactile.

2. Dispositif de communication selon la revendication 1, **caractérisé en ce que** les contacts actifs comprennent les propriétés d'un contact tactile.

3. Dispositif de communication selon l'une quelconque des revendications 1 à 2, **caractérisé en ce qu'**au moins un actionneur comprend des moyens permettant de faire varier localement la charge d'un écran tactile capacitif.

4. Dispositif de communication selon l'une quelconque des revendications 1 à 3, **caractérisé en ce que** le terminal comprend au moins trois actionneurs non alignés.

5. Dispositif de communication selon la revendication 4, **caractérisé en ce que** les actionneurs définissent des points du périmètre de la prem ière zone.

6. Dispositif de communication selon l'une des revendications précédentes, **caractérisé en ce que** le dispositif comprend une carte à puce, ladite carte à puce comprenant le terminal et le convertisseur.

7. Dispositif de communication selon l'une des revendications 1 à 5, **caractérisé en ce que** le dispositif comprend un lecteur de carte, ledit lecteur de carte comprenant le terminal et le convertisseur.

8. Dispositif de communication selon la revendication 7, **caractérisé en ce que** le lecteur de carte est un lecteur de cartes à puces.

9. Dispositif de communication selon l'une des revendications précédentes, **caractérisé en ce que** le terminal comprend une optique permettant de détecter un signal lumineux provenant de l'écran tactile de manière à localiser la source, la durée d'émission et l'intensité lumineuse.

10. Dispositif de communication selon la revendication 9, **caractérisé en ce qu**'un second convertisseur permet la conversion d'une séquence d'impulsions lumineuses en données numériques.

11. Dispositif de communication selon la revendication 10, **caractérisé en ce que** le premier et le second convertisseur sont identiques.

12. Dispositif de communication selon l'une des revendications précédentes, **caractérisé en ce que** le dispositif comprend au moins deux terminaux permettant d'établir une liaison entre deux équipements comprenant chacun un écran tactile.

13. Système de communication comprenant un dispositif de communication selon l'une des revendications précédentes et un équipement électronique comprenant un écran tactile, **caractérisé en ce que** l'équipement électronique comprend un calculateur permettant de décoder une séquence de contacts actifs générés par le dispositif de communication.

14. Système de communication selon la revendication précédente, **caractérisé en ce que** le calculateur permet de générer des commandes de manière à ce que l'écran tactile émette une séquence d'impulsions lumineuses dans des zones données de l'écran tactile.
